(19) Europäisches Patentamt
European Patent Office
Office européen des brevets

(11) Publication number: **0 249 138 B1**

(12) # EUROPEAN PATENT SPECIFICATION

(45) Date of publication of patent specification:
28.08.91 Bulletin 91/35

(51) Int. Cl.⁵: **F02D 29/04, F02D 11/04**

(21) Application number: **87108030.5**

(22) Date of filing: **03.06.87**

(54) **Acceleration modulator for a hydraulic driving system.**

(30) Priority: **11.06.86 JP 136968/86**

(43) Date of publication of application:
**16.12.87 Bulletin 87/51**

(45) Publication of the grant of the patent:
**28.08.91 Bulletin 91/35**

(84) Designated Contracting States:
**DE FR GB IT**

(56) References cited:
**EP-A- 0 159 835**
**EP-A- 0 180 184**
**FR-A- 2 188 688**
**GB-A- 2 118 241**

(73) Proprietor: **SHIMADZU CORPORATION**
**1, Nishinokyo-Kuwabaracho**
**Nakagyo-ku Kyoto-shi Kyoto 604 (JP)**

(72) Inventor: **Kita, Yasuo**
**62-39 Ootsuka Motoyashiki-cho**
**Yamashina-ku Kyoto (JP)**

(74) Representative: **Grams, Klaus Dieter,**
**Dipl.-Ing. et al**
**Patentanwaltsbüro Tiedtke-Bühling-Kinne-**
**Grupe-Pellmann-Grams-Struif Winter-Roth**
**Bavariaring 4**
**W-8000 München 2 (DE)**

## Description

This invention relates to an apparatus for modulating acceleration in a hydraulic driving system of an automotive vehicle according to the preamble of the claim 1.

A system according to the preamble of the claim 1 is known from the EP-A-180 184.

In the case of the conventional differential mechanisms, lever mechanisms are used which cannot work with a hundred percent precision due to the bearings and the points of connection (sliding bearings) which are necessary for mechanical reasons and have clearances. Moreover, there is the danger of jamming after long use.

In contrast to this, there is the subject matter of the invention. It shall avoid these disadvantages and therefore has the object to provide a differential mechanism according to the preamble of the claim 1 which works reliably and absolutely precisely over a long period of time, as well as makes possible a transmission ratio arbitrarily adjustable within broad limits while requiring as little space as possible.

This object is achieved by the features indicated in the characterizing portion of the claim 1.

According to the invention the lever mechanism is replaced by a sun gear mechanism which guarantees a precise force and path transmission free from clearance.

The constructive design and the integration of the differential mechanism into the hydraulic driving system is indicated in the subclaims 2 to 5.

The invention will be described with reference to the accompanying drawings.

Fig. 1 schematically shows a driving system in which the acceleration modulator of the invention is incorporated ;
Fig. 2 is a top plan view of the acceleration modulator in the system of Fig. 1 ;
Fig. 3 is a vertical section of the modulator shown in Fig. 2 ;
Fig. 4 is a transverse section taken along line IV - IV in Fig. 3 ;
Fig. 5 is a transverse section taken along line V - V in Fig. 3 ; and
Fig. 6 is a block diagram of the device for taking out the pilot pressure used in the system of Fig. 1.

The acceleration modulator of the invention is incorporated into a hydraulic driving system which comprises a prime mover the output of which varies with the amount of operation applied to the terminal for controlling energy supply to the prime mover, a hydraulic pump driven by the prime mover, a hydraulic motor for driving the wheels of a vehicle, and a hydraulic circuit for connecting the pump and the motor to operate the motor with the output pressure of the pump thereby to drive the vehicle wheels.

Briefly stated, the acceleration regulator of the invention comprises : an element for transmitting displacement comprising a first portion and a second portion ; a differential mechanism having a first input terminal connected to the first portion of the element, a second input terminal, and an output terminal connected to the second portion of the elemnet, and being so arranged that the amount of operation applied through the first portion of the element to the first input terminal is modulated differentially by the the position of the second input terminal so that the modulated amount of operation is taken out at the output terminal ; and a fixing mechanism for variably fixing the position of the second input terminal of the differential mechanism, the fixing mechanism being so arranged that when the hydraulic pressure in the hydraulic circuit of the driving system rises to a preset level slightly lower than the relief pressure of the circuit, the second input terminal of the differential mechanism is moved to a position where the amount of output available at the output terminal of the differential mechanism decreases.

So long as the hydraulic pressure in the hydraulic circuit remains below the preset level adjacent to the relief pressure of the hydraulic circuit, the fixing mechanism holds the second input terminal of the differential mechanism at a fixed position. Under the condition, the amount of operation applied to the first portion of the displacement transmitting element and transmitted to the first input terminal of the differential mechanism is not changed but taken out at the output terminal of the differential mechanism so as to be transmitted to the control terminal of energy supply to the prime mover. In this case the output of the prime mover can be controlled in substantially the same manner as if there were no differential mechanism interposed between the first and second portions of the displacement transmitting element.

When an excessive amount of operation has been applied to the first portion of the displacement transmitting element so that the output of the prime mover increases thereby to cause the system pressure in the hydraulic circuit to exceed the preset level slightlty lower than the relief pressure of the circuit, the fixing mechanism operates in response to the increased system pressure to change the fixed position of the second input terminal of the differential mechanism so as to reduce the amount of displacement to be taken out at the output terminal of the differential mechanism. As a result, as the excessive amount of operation applied to the first portion of the displacement transmitting element is delivered to the control terminal of energy supply to the prime mover, the amount is reduced to such a relatively low level as to prevent unnecessary increase of the output of the prime mover.

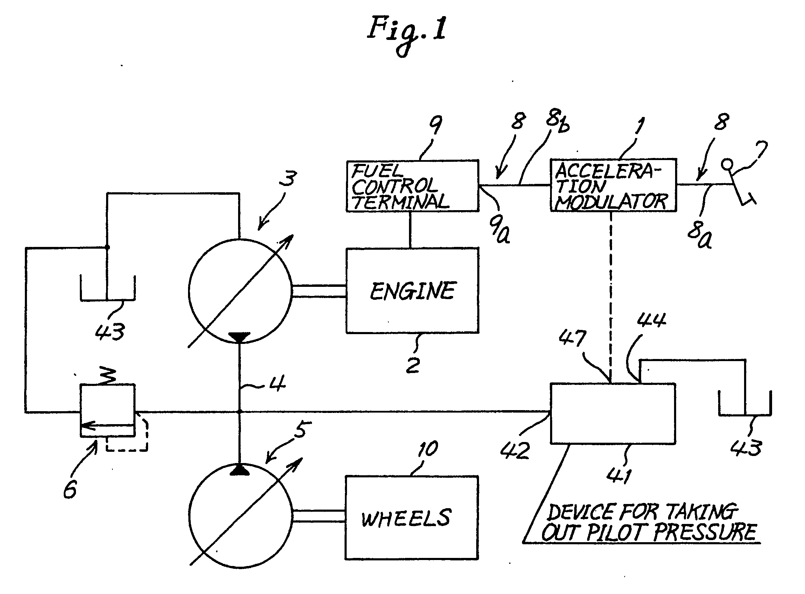

Referring to Fig. 1, there is schematically shown a driving system for an automotive vehicle, into which the acceleration modulator of the invention is incorporated as shown as a mere block 1. The driving system can be employed in a tractor, for example, and comprises an engine 2 as a prime mover, a hydraulic pump 3 driven by the output of the engine 2, a hydraulic motor 5 driven by the output hydraulic pressure of the pump 3, and a hydraulic circuit 4 connecting the pump and the motor. The motor 5 produces an output to drive the wheels of a vehicle shown as a mere block 10.

The pump 3 and the motor 5 are of a variable displacement type, so that the transmission ratios of the driving system can be varied continuously by changing the displacement of either or both of the pump and the motor. The hydraulic circuit 4 is provided with a relief valve 6 to define the upper limit of the system pressure thereby to prevent destruction of the circuit 4. The output of the engine 2 is controlled by the amount of operation on an accelerator pedal 7 transmitted through an element such as a wire 8 for transmitting the displacement of the pedal 7 to a fuel control element 9 of the engine 2 such as a throttle valve in a carburetor, not shown, for the engine.

In accordance with the invention, the wire 8 comprises two portions, that is, the first wire portion 8a connected at one end thereof to the accelerator pedal 7 and the second wire portion 8b connected at one end thereof to an operating rod 9a for controlling the throttle valve 9.

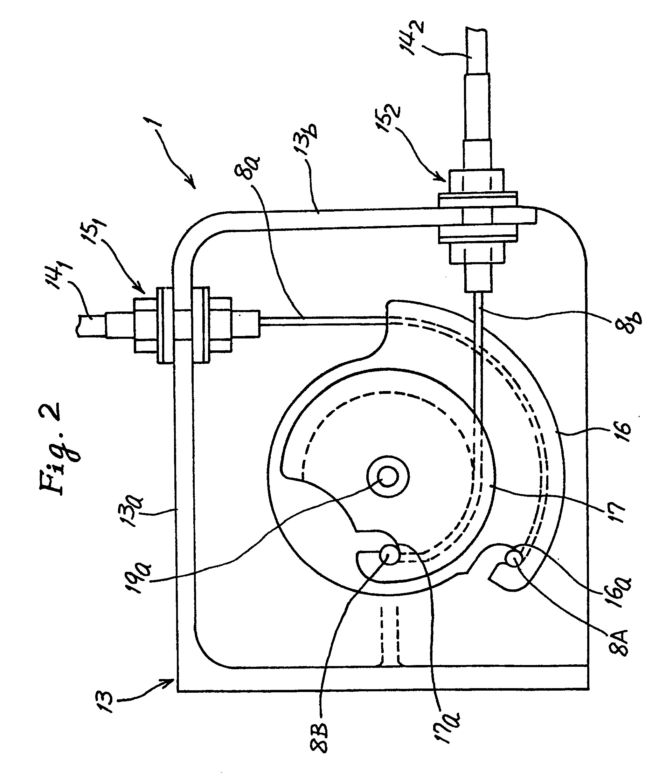

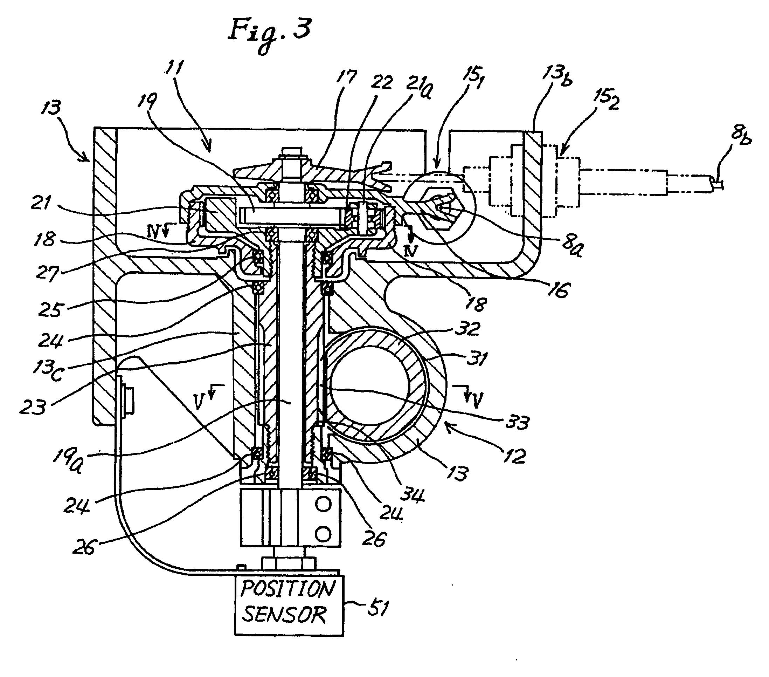

The acceleration modulator 1 of the present invention is provided between the other end of the first wire portion 8a and the other end of the second wire portion 8b. One form of the modulator 1 is shown in detail in Figs. 2 through 5, comprising a differential mechanism 11 having a first and a second input terminal and an output terminal and so designed as to subtract the amount of operation applied to the second input terminal from the amount of operation applied to the first input terminal and produce an amount of operation corresponding to the result of subtraction at the output terminal, and a mechanism 12 for variably fixing the position of the second input terminal of the differential mechanism 11.

The differential mechanism 11 is enclosed in a casing 13, which supports the first wire portion 8a of the wire 8 by a first lateral wall 13a thereof and the second wire portion 8b of the wire by a second lateral wall 13b thereof extending at right angles with the first lateral wall 13a. In particular, the first and second wire portions 8a and 8b pass through bearing sleeves $14_1$ and $14_2$, respectively, to be slidably supported thereby. The sleeves $14_1$ and $14_2$ are mounted on the lateral side walls 13a and 13b of the casing 13 by means of retainers $15_1$ and $15_2$, respectively.

The first wire portion 8a has its rear end 8A engaged with a recess 16a formed on the periphery of an first pulley 16 constituting the first input terminal of the differential mechanism 11. The second wire portion 8b has its forward end 8B engaged with a recess 17a formed on the periphery of an second pulley 17 constituting the output terminal of the differential mechanism 11. The wire portions 8a and 8b run partially about the pulleys 16 and 17, respectively.

In the illustrated embodiment, the differential mechanism 11 is of the planetary type comprising a ring gear 18, a sun gear 19 secured to a shaft 19a and arranged within the ring gear 18 coaxially therewith, a gear retainer 21 arranged rotatably and coaxially with both the sun gear 19 and the ring gear 18, and a plurality, say, three planetary gears 22 rotatably supported on the gear retainer 21 by means of a pin 21a and engaged with both the ring gear 18 and the sun gear 19. The previously mentioned first pulley 16 is mounted on the ring gear 18 for simultaneous rotation therewith, and the previously mentioned second pulley 17 is mounted on the shaft 19a for simultaneous rotation therewith.

The gear retainer 21 has its under side fixed to a hollow cylindrical input shaft 23, which constitutes the second input terminal of the differential mechanism 11, for simultaneous rotation therewith. The input shaft 23 is rotatably supported by a pair of radial bearings 24 mounted in a boss 13c formed inside the casing 13. The ring gear 18 is mounted by a bearing 25 on the gear retainer 21 fixed to the upper end of the input shaft 23. The support shaft 19a of the sun gear 19 is rotatably supported on the input shaft 23 and the gear retainer 21 by means of bearings 26 and 27. The previously mentioned fixing mechanism 12 engages the input shaft 23 so as to fix the shaft at a desired angular position, which can be changed as will be described presently.

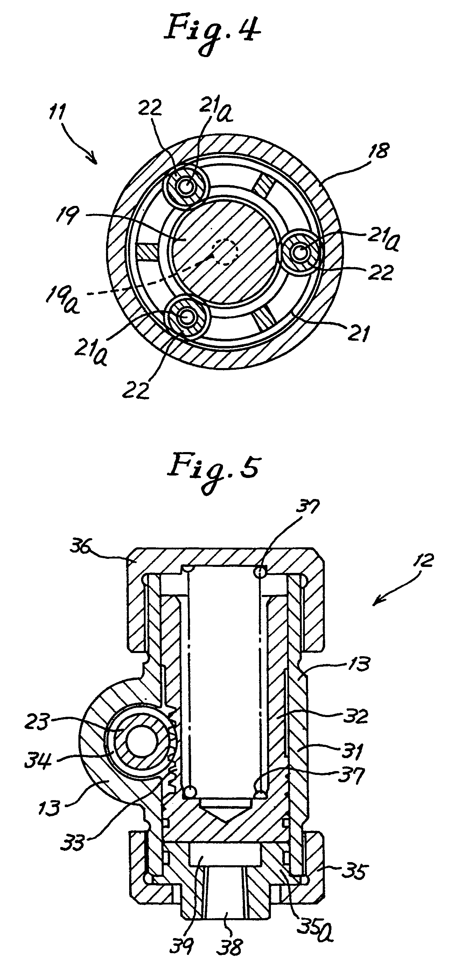

As shown in Fig. 5, the fixing mechanism 12 comprises a cylinder chamber 31 formed in the casing 13 in association with the boss 13c, and a piston 32 slidably disposed in the cylinder 31 so as to be operated by the pilot pressure taken out of the hydraulic pressure circuit 4 as will be described presently. The piston 32 is formed on the exterior surface thereof with a rack 33 extending axially of the piston and engaging a pinion gear 34 formed on the exterior circumferential surface of the input shaft 23.

In further detail, the cylinder chamber 31 extends perpendicularly to the input shaft 23 and is provided at the opposite ends with a pair of caps 35 and 36 and a plug 35a liquid-tightly closing the cylinder chamber as shown in Fig. 5. The piston 32 is a hollow cylindrical member open at one end and closed at the other, with a compression coil spring 37 enclosed therein to normally urge the piston 32 against the inner face of the cylinder plug 35a. In the cylinder plug 35a there is formed a passage 38 connected to a device 41 for taking out a pilot pressure so that the pilot pressure taken out of the hydraulic circuit 4 is introduced through the passage 38 into a pilot pressure chamber 39 formed in the inner end face of the plug 35a defined by the closed end of the piston 32.

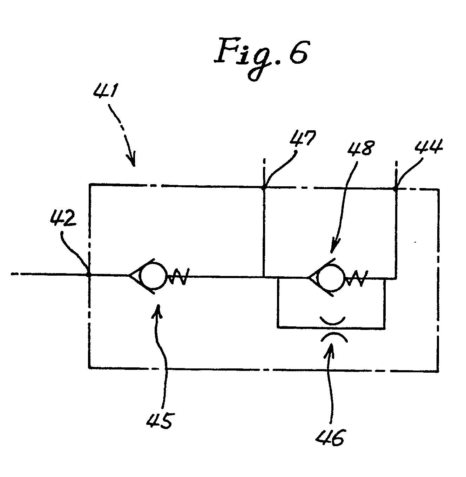

As schematically shown in Fig. 6, the device 41 for taking out a pilot pressure has an inlet port 42 through which the system pressure in the hydraulic circuit 4 the upper limit of which is defined by the previously mentioned relief valve 6 is introduced into the device 41, an outlet port 44 through which the pressure is discharged into a reservoir tank 43 shown in Fig. 1, a series combination of a first relief valve 45 and a restrictor 46 connected between the inlet and outlet ports 42 and 44, a pilot pressure port 47 connected between the first relief valve 45 and the restrictor 46 for a pilot pressure to be taken out therefrom, and a second relief valve 48 connected in parallel with the restrictor 46 to regulate the pilot pressure to be taken out.

The operating pressure of the first relief valve 45 is set to a level a little lower than that of the relief valve 6 in the hydraulic circuit 4. The pilot pressure port 47 is connected to the passage 38 in the cylinder plug 35a.

A sensor 51 detects the opening of the throttle valve 9, that is, converts the rotational angle of the support shaft 19a of the sun gear 19 in the previously mentioned differential mechanism 11 to a corresponding electrical signal, which is used for controlling the engine 2.

The system of the invention operates in the following manner.

So long as the system pressure in the hydraulic circuit 4 remains below the preset pressure level of the device 41 a little lower than the preset pressure of the relief valve 6, no pilot pressure will be supplied from the device 41 to the fixing mechanism 12, so that the spring 37 keeps the piston 32 abutting on the inner face of the cylinder plug 35a and consequently the input shaft 23 of the differential mechanism 11 at a predetermined angular position and the planetary gears 22 at predetermined waiting positions. Under the condition, the amount of displacement of the accelerator pedal 7 is transmitted to the first pulley 16 and thence through the ring gear 18, the planetary gears 22, the sun gear 19 and the support shaft 19a thereof successively to the second pulley 17 fixed to the upper end of the shaft 19a, so that the second pulley 17 is rotated in the direction opposite to that of rotation of the first pulley 16 so as to pull the second portion 8b of the accelerator wire 8 thereby to control the opening of the throttle valve 9 in accordance with the amount of operation on the accelerator pedal 7.

If the accelerator pedal 7 has been operated excessively so that the resulting increase in the output of the engine 2 causes the system pressure in the hydraulic circuit 4 to exceed the preset pressure level of the device 41 a little lower than the relief pressure of the relief valve 6 in the circuit 4, the first relief valve 45 in the device 41 is opened to introduce into the pressure chamber 39 of the fixing mechanism 12 a pilot pressure the upper level of which is defined by the opening pressure of the second relief valve 48. The pilot pressure introduced into the chamber 39 urges the piston 32 away from the cylinder plug 35a against the force of the spring 37, thereby to cause the input shaft 23 of the differential mechanism 11 engaged by the rack 33 on the piston 32 to rotate about the axis of the input shaft 23 for an angle corresponding to the pilot pressure, whereupon the positions of the planetary gears 22 on the gear retainer 21 change thereby to reduce the output angular displacement of the sun gear 19. This means that the amount of angular displacement of the input shaft 23 of the differential mechanism 11 has been subtracted from the amount of operation on the accelerator pedal 7 transmitted to the first pulley 16, and the resulting reduced amount of displacement is taken out from the second pulley 17 so as to control the opening of the throttle valve 9.

With the apparatus of the invention as described above in detail, even when the accelerator pedal 7 has been excessively operated by mistake, the output of the engine 2 is automatically restricted to prevent the system pressure from reaching the relief pressure level thereby to prevent a large amount of working fluid from being returned to the tank 43 through the relief valve 6, with resulting marked reduction of energy loss and effective prevention of abnormal rise of the temperature of the working fluid.

Since the displacement of the first wire portion 8a of the wire 8 is transmitted through a gear type differential mechanism, that is, the differential mechanism 11 to the second wire portion 8b, there is scarcely any error, delay or loss in transmission of movement, so that the operator can control the throttle valve 9 as effectively as if there were no acceleration modulator and without deterioration of the feeling of operating the throttle valve.

Advantageously the throttle position sensor 51 is secured to the lower portion of the shaft 19a which projects outside the casing 13 as in the illustrated embodiment of the invention, so that the sensor 51 is scarcely affected by the vibration of the engine.

The acceleration modulator of the invention can be easily incorporated into a driving system and prevent loss of energy and abnormal temperature rise of the working fluid which would otherwise be caused by excessive operation of acceleration of the driving system, and this is possible without damaging the feeling of operation of acceleration. Since the element for transmitting displacement comprises a wire, it enables easy connection to the differential gear and proper and reliable control of acceleration.

## Claims

1. A hydraulic driving system for an automotive vehicle, comprising an acceleration modulator (1) containing a differential mechanism (11), which controls an output quantity correspondingly in response to two input quantities and ensures that the system pressure in said hydraulic system does not exceed a predetermined limit, wherein the first input (8a, 16) is associated to a position of the accelerator pedal (7), the second input (45, 12, 23) is associated to a pilot pressure of said hydraulic system, and the output is associated to a fuel control element (9) and wherein said output quantity is the fuel amount of an internal combustion engine (2) driving a hydraulic pump (3) supplying hydraulic pressure in said driving system, **characterized in that** said differential mechanism (11) is formed by a sun gear mechanism (18, 19, 22).

2. A system according to claim 1, **characterized in that** said first input (8a, 16) of said differential mechanism (11) is associated to the ring gear (18) of said sun gear mechanism (18, 19, 22), said second input (45, 12, 23) is associated to the planetary gears (22), and said output is associated to the sun gear (19).

3. A system according to one of the preceding claims 1 to 2, **characterized in that** said first input of said differential mechanism (11) is connected to said accelerator pedal (7) by means of a first pulley (16) and a first wire portion (8a), and said output of said differential mechanism (11) is connected to said fuel control element (9) by means of a second pulley (17) and a second wire portion (8b).

4. A system according to one of the preceding claims 1 to 3, **characterized in that** said second input of said differential mechanism (11) is operatively connected to a piston (32) comprising a corresponding rack (33) by means of a shaft (23) comprising a pinion gear (34), said piston being slidably disposed in a cylinder chamber (31) and being loaded by a spring (37) on the one hand, and a by said pilot pressure of said hydraulic system on the other hand.

5. A system according to one of the preceding claims 1 to 4, **characterized in that** said hydraulic system comprises a first pressure relief valve (45) supplying said pilot pressure, which is slightly lower than the maximum pressure of said hydraulic system, at said piston (32).

des Beschleunigungspedals (7) verknüpft ist, der zweite Eingang (45, 12, 23) mit einem Vorsteuerdruck des besagten Hydrauliksystems verbunden ist sowie der Ausgang an ein Kraftstoff-Regelelement (9) angeschlossen ist und wobei die genannte Ausgangsgröße die Kraftstoffmenge einer Brennkraftmaschine (2) ist, welche eine einen Hydraulikdruck in das Antriebssystem einspeisende Hydraulikpumpe (3) antreibt, dadurch gekennzeichnet, daß das erwähnte Differentialgetriebe (11) von einem Sonnenradgetriebe (18, 19, 22) gebildet ist.

2. System nach Anspruch 1, dadurch gekennzeichnet, daß der genannte erste Eingang (8a, 16) des erwähnten Differentialgetriebes (11) mit dem Ringrad (18) des besagten Sonnenradgetriebes (18, 19, 22) verbunden ist, der genannte zweite Eingang (45, 12, 23) mit den Planetenrädern (22) verbunden ist und der genannte Ausgang mit dem Sonnenrad (19) verbunden ist.

3. System nach einem der vorhergehenden Ansprüche 1 bis 2, dadurch gekennzeichnet, daß der genannte erste Eingang des erwähnten Differentialgetriebes (11) mit dem besagten Beschleunigungspedal (7) durch eine erste Seilscheibe (16) sowie einen ersten Seilzugabschnitt (8a) verbunden ist und der genannte Ausgang des erwähnten Differentialgetriebes (11) mit dem besagten Kraftstoff-Regelelement (9) über eine zweite Seilscheibe (17) sowie einen zweiten Seilzugabschnitt (8b) in Verbindung steht.

4. System nach einem der vorhergehenden Ansprüche 1 bis 3, dadurch gekennzeichnet, daß der genannte zweite Eingang des erwähnten Differentialgetriebes (11) mit einem eine zugehörige Zahnstange (33) umfassenden Kolben (32) durch eine ein Ritzelrad (34) besitzende Welle (23) in Wirkverbindung steht, wobei der besagte Kolben verschiebbar in einer Zylinderkammer (31) angeordnet sowie einerseits von einer Feder (37) und andererseits von dem erwähnten Vorsteuerdruck des besagten Hydrauliksystems belastet ist.

5. System nach einem der vorhergehenden Ansprüche 1 bis 4, dadurch gekennzeichnet, daß das besagte Hydrauliksystem ein erstes, den erwähnten Vorsteuerdruck, welcher geringfügig niedriger als der maximale Druck des besagten Hydrauliksystems ist, zu dem genannten Kolben (32) lieferndes Druckentlastungsventil (45) umfaßt.

## Patentansprüche

1. Hydraulisches Antriebssystem für ein Kraftfahrzeug, das einen Beschleunigungsregler (1) umfaßt, welcher ein Differentialgetriebe (11) enthält, das eine Ausgangsgröße gemäß der Abhängigkeit von zwei Eingangsgrößen regelt und gewährleistet, daß der Systemdruck in dem besagten Hydrauliksystem eine vorbestimmte Größe nicht übersteigt, wobei der erste Eingang (8a, 16) mit einer Position

## Revendications

1. Système d'entraînement hydraulique pour un véhicule automoteur, comprenant un modulateur d'accélération (1) contenant un mécanisme différentiel (11), lequel commande un paramètre de sortie en fonction de deux paramètres d'entrée et assure que la pression de service dans le système hydraulique n'excède pas une limite prédéterminée, dans lequel la première entrée (8a, 16) est associée à une position de la pédale d'accélérateur (7), la deuxième entrée (45, 12, 23) est associée à une pression pilote de ce système hydraulique, et la sortie est associée à un élément de commande du carburant, et dans lequel le paramètre de sortie est la quantité de carburant fournie à un moteur à combustion interne (2) entraînant une pompe hydraulique (3) fournissant la pression hydraulique dans ce système d'entraînement, caractérisé en ce que
le mécanisme différentiel (11) est formé par un mécanisme planétaire (18, 19, 22).

2. Système selon la revendication 1, caractérisé en ce que la première entrée (8a, 16) du mécanisme différentiel (11) est associée à la première couronne dentée (18) du mécanisme planétaire (18, 19, 22), la deuxième entrée (45, 12, 23) est associée aux satellites et la sorte est associée à la roue solaire (19).

3. Système selon la revendication 1 ou 2, caractérisé en ce que la première entrée du mécanisme différentiel (11) est reliée à la pédale d'accélérateur (7) au moyen d'une première poulie (16) et d'une première portion de câble (8a) et en ce que la sortie du mécanisme différentiel (11) est reliée à l'élément de commande du carburant (9) au moyen d'une deuxième poulie (17) et d'une deuxième portion de câble (8b).

4. Système selon l'une des revendications 1 à 3, caractérisé en ce que la deuxième entrée du mécanisme différentiel (11) est fonctionnellement reliée à un piston (32) sur lequel est formée une crémaillère (33) au moyen d'un arbre (23) portant un pignon (34), le pignon pouvant coulisser dans une chambre cylindrique (31) et étant soumis, d'un côté à un ressort (37) et de l'autre côté à la pression pilote du système hydraulique.

5. Système selon l'une des revendications 1 à 4, caractérisé en ce que le système hydraulique comporte un premier clapet de sûreté (45) fournissant la pression pilote, laquelle est légèrement inférieure à la pression maximale du système hydraulique, au niveau du piston (32).

*Fig.1*

EP 0 249 138 B1

Fig. 2

Fig. 3

POSITION
SENSOR — 51

EP 0 249 138 B1

# Fig. 4

# Fig. 5

# Fig. 6